# EUROPÄISCHE PATENTSCHRIFT

(11) **EP 0 711 594 B1**
(45) Veröffentlichungstag und Bekanntmachung des Hinweises auf die Patenterteilung: **13.10.1999**
(21) Anmeldenummer: 95117958.9
(22) Anmeldetag: 14.11.1995
(51) Int. Cl.: B01J 3/04, B01J 19/02, B01D 53/18

(54) **Verfahren zur Absorption mindestens eines hochkorrosiven Mediums**
Method for the absorption of at least one highly corrosive medium
Procédé pour l'absorption d'au moins un médium très corrosif

(30) Priorität: 14.11.1994 DE 4440615
(43) Veröffentlichungstag der Anmeldung: 15.05.1996
(73) Patentinhaber: BASF AKTIENGESELLSCHAFT, 67056 Ludwigshafen (DE)
(72) Erfinder: Müller, Rolf, D-67125 Dannstadt-Schauernheim (DE); Schellenberg, Rolf, Dr., D-67269 Grünstadt (DE); Langer, Ernst, Dr., D-67158 Ellerstadt (DE); Wagner, Gerhard, Dr., D-67069 Ludwigshafen (DE)
(74) Vertreter: Isenbruck, Günter, Dr.

(56) Entgegenhaltungen:
- DE-A- 1 542 005
- DE-A- 4 311 417
- FR-A- 873 332
- US-A- 2 664 348
- US-A- 5 064 450

## Beschreibung

Die Erfindung betrifft eine Vorrichtung und ein Verfahren zur Absorption mindestens eines hochkorrosiven Mediums nach dem Oberbegriff des Patentanspruchs 1 bzw. nach dem Oberbegriff des Patentanspruchs 10.

Hochkorrosive Medien, wie beispielsweise Flüssigkeiten oder Dämpfe werden insbesondere auch aus ökologischen Gründen nicht in das Freie abgegeben. Aus diesem Grunde sind Vorrichtungen und Verfahren entwickelt worden, die derartige hochkorrosive Medien absorbieren.

Aus der DE-OS 36 14 556 A1 ist bereits ein Destillationskühler für Labor und Technikum zum Kondensieren gefährlicher Schadstoffe enthaltender Flüssigkeiten und Verwendung des Destillationskühlers bei der Abdestillation von Lösungsmitteln radioaktiver Substanzen bekannt. Der bekannte Destillationskühler besteht aus einem Gefäß mit einer Doppelwandung, zwischen welchen ein Kühlraum eingeschlossen ist.

Der Destillationskühler besteht, wie bei Labor- und Technikumsgeräten dieser Art üblich, vorzugsweise aus Glas oder einem Kunststoff. Als Absorptionsmaterial wird zum Binden radioaktiver Stoffe Ethanol-Amin, Phosphorsäure oder konzentrierte Natronlauge verwendet.

Der vorbekannte Destillationskühler ist jedoch nur für niedere Drücke und geringere Temperaturen geeignet.

Aus der internationalen Patentanmeldung WO 90/09225 ist bereits eine Vorrichtung zur Eliminierung atmosphärischer Verschmutzung bekannt. Die vorbekannte Vorrichtung weist eine Absorptionskammer mit einer inneren gewellten Wand und mit einer Außenwand auf, wobei die innere Wand aus korrosionsbeständigem Material besteht. Diese Innenwand ist der Korrosionswirkung des jeweiligen korrosiven Mediums ausgesetzt.

Des weiteren ist aus der FR-A-873 332 eine Vorrichtung zur Absorption von Gasen bekannt, die jeweils einen gewellten Innen- und Außenbehälter aufweist. Der Innenbehälter wird über eine Zuführung mit einem Kühlmedium versehen, das über eine ebenfalls vorgesehene Abführleitung wieder aus dem Innenbehälter ausströmt und somit ständig erneuert werden kann. In den Raum zwischen dem Innen- und Außenbehälter werden über entsprechende Einlässe das flüssige Absorptionsmittel und das zu absorbierende Gas so zugeführt, daß die Absorption nach dem Gegenstromprinzip erfolgt. Dabei ist der Einlaß für das Absorptionsmittel oberhalb des Einlasses für das Gas angeordnet. Als bevorzugtes Material für die Absorptionsvorrichtung wird Glas genannt.

Außerdem offenbart die DE-A-1 542 005 einen Hochdruckreaktor, der einen Innenbehälter aus korrosionsbeständigem Werkstoff und einen Außenbehälter aufweist, die durch einen Zwischenraum voneinander beabstandet sind. Dieser Zwischenraum ist mit einem flüssigen Medium gefüllt und über eine Leitung mit einem Ausgleichsgefäß verbunden. Da das Ausgleichsgefäß über dem höchsten Punkt des Reaktors angeordnet ist, wird gewährleistet, daß der Druck im Zwischenraum immer etwas über dem Druck im Innenbehälter liegt.

Der so ausgebildete Hochdruckreaktor ist für Synthesen unter Anwendung hoher Drucke und Temperaturen ausgelegt, bei denen korrodierende Stoffe beteiligt sind oder entstehen.

Die US-A-2 664 348 offenbart einen Reaktor, der ebenfalls für Reaktionen korrosiver Medien, insbesondere für Reaktionen unter hohem Druck, geeignet ist. Auch dieser Reaktor weist einen Innenbehälter und einen Außenbehälter sowie einen dazwischen gebildeten Raum auf. Dieser Zwischenraum ist völlig mit einem fluiden Medium gefüllt, das auf einen Druck eingestellt wird, der dem Druck im Innenbehälter entspricht.

Bevorzugt wird diese Anordnung für solche Reaktionen verwendet, bei denen zumindest ein Reaktionsteilnehmer erst bei erhöhter Temperatur stark korrosiv wird, während er es bei Raumtemperatur nicht ist.

Ausgehend von diesem Stand der Technik lag der vorliegenden Erfindung die Aufgabe zugrunde, ein Verfahren zur Absorption mindestens eines hochkorrosiven Mediums bereitzustellen, das auch für vergleichsweise hohe Druck- und/oder Temperaturbereiche anwendbar und dennoch in einfacher Weise durchführbar ist.

Gelöst wird diese Aufgabe durch die Merkmale des Anspruchs 1.

Das erfindungsgemäße Verfahren zeichnet sich durch den Vorteil aus, daß neben den Verfahrensschritten zur eigentlichen Absorption mindestens eines hochkorrosiven Mediums im Innenbehälter lediglich das Medium im Raum zwischen Innen- und Außenbehälter auf eine vorbestimmbare Druckdifferenz gegenüber dem Druck im Innenbehälter gesetzt wird.

Vorzugsweise ist das Absorptionsmedium wässrige Salzsäure oder Natronlauge und das hochkorrosive Medium HCl-Gas, während das den Innenbehälter umgebende Medium Wasser ist.

Gemäß einer bevorzugten Ausführungsform des erfindungsgemäßen Verfahrens wird der Innenbehälter lösbar mit dem Außenbehälter verbunden. Hierdurch werden eine schnelle Montage und Demontage sowie entsprechende kurze Zykluszeiten ermöglicht.

Hinsichtlich der Vorrichtung, mit der das erfindungsgemäße Verfahren durchgeführt wird, ist als besonders vorteilhaft zu erwähnen, daß der Innenbehälter aus korrosionsbeständigem Werkstoff, in dem das hochkorrosive Medium aus dem Absorptionsmedium gewaschen wird, aus einem Material hergestellt werden kann, welches selbst nicht zum Bau von Druckapparaten geeignet ist.

Es kann vorgesehen sein, daß die Vorrichtung, mit der das erfindungsgemäße Verfahren durchgeführt wird, mit einer Einrichtung verbunden wird, die das den Innenbehälter umgebende Medium auf ein Austreten des im Innenbehälter befindlichen Mediums in den Raum zwischen Außen- und Innenbehälter überwacht.

Die Erfindung wird nun anhand einer Zeichnung näher beschrieben, die ein Ausführungsbeispiel einer Vorrichtung, in der das erfindungsgemäße Verfahren durchgeführt werden kann, zeigt.

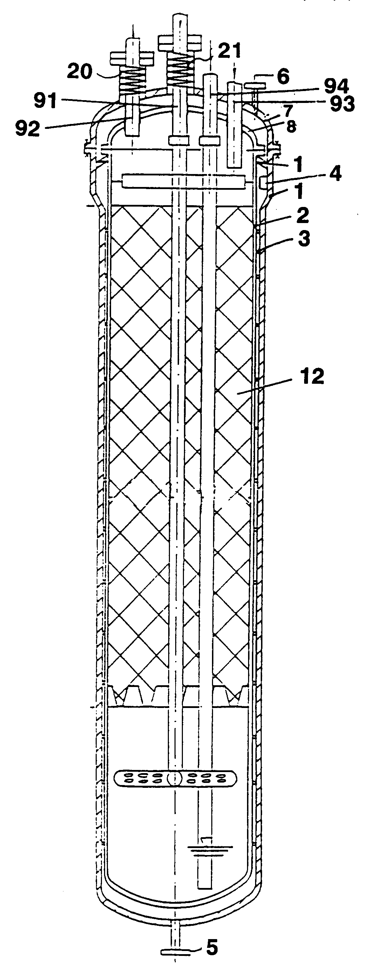

Die Vorrichtung besteht aus einem Druck tragenden Außenbehälter 1 und einem Innenbehälter 2. Außenbehälter 1 und Innenbehälter 2 weisen im wesentlichen dieselbe Form auf, beispielsweise wie in der Figur angegeben, eine im wesentlichen zylindrische Form. Ein zwischen dem Außenbehälter 1 und dem Innenbehälter 2 gebildeter Raum, vorzugsweise ein dünner Zylinderspaltraum, dient der Aufnahme eines Mediums 3, insbesondere einer Flüssigkeit, die den Innenbehälter 2 umgibt bzw. trägt. Bei der in der Figur dargestellten Vorrichtung schwimmt der Innenbehälter in einer Flüssigkeit, zum Beispiel Wasser, die in den Außenbehälter eingeführt worden ist.

Im Raum zwischen Außen- und Innenbehälter wird ein Druck eingestellt, der höher als der Druck im Inneren des Innenbehälters ist. Beispielsweise ist der Druck der im Zwischenraum befindlichen Flüssigkeit etwa 1-2 bar höher eingestellt als der Bezugsdruck im Innenbehälter. Der gewählte Differenzdruck ist auf das Material und den Aufbau des Innenbehälters abgestimmt.

Der Innenbehälter 2 besteht aus einem im Hinblick auf das zu verarbeitende hochkorrosive Medium beständigen Material. Beispielsweise besteht der Innenbehälter 2 aus Kunststoff (GFK, etc.), aus einem seltenen metallischen Werkstoff (z.B. Zirkonium) oder aus Email. Durch die Wahl des Differenzdruckes von beispielsweise 1 bis 2 bar im Zwischenraum zwischen Innenbehälter und Außenbehälter gegenüber dem Druck im Innenbehälter kann die Festigkeit des Innenbehälters auf diesen Druck ausgelegt werden. Damit wird die Verwendung von Kunststoffen als Material für den Innenbehälter ermöglicht.

Der Innenbehälter 2 ist vorzugsweise lösbar mit dem Außenbehälter 1 verbunden und lagert beispielsweise auf einem z.B. flanschförmigen Auflageelement 10, das im Inneren des Außenbehälters 1 angeordnet ist.

Der Außenbehälter 1 weist eine Öffnung 5 für die Zuführ der druckgebenden Flüssigkeit in den Zwischenraum zwischen Außen- und Innenbehälter sowie eine weitere Öffnung 6 für den Abfluß dieser Flüssigkeit aus der Vorrichtung auf. Beispielsweise ist die Einlauföffnung 5 für die Flüssigkeit im unteren Bereich der Vorrichtung angeordnet, während die Öffnung 6 für den Abfluß der Flüssigkeit im oberen Bereich angeordnet ist. Diese Anordnung ermöglicht es, daß die Flüssigkeit den Zwischenraum zwischen Außen- und Innenbehälter durchströmt. Dabei kann diese Flüssigkeit auch als Wärmetauschflüssigkeit wirken, insbesondere vom Innenbehälter abgegebene Wärme abführen.

Der Außenbehälter 1 und der Innenbehälter 2 sind je mit einer Abdeckung 7, 8 verschließbar. Zu- und Abflußrohre 91, 92; 93, 94 für die hochkorrosiven Medien und das Absorptionsmittel verlaufen durch die Abdeckung 7 und 8. Die Rohre 91, 92 dienen dem Zu- bzw. Abfluß des hochkorrosiven Mediums (zum Beispiel HCl-Gas), während die Rohre 93, 94 dem Zu- bzw. Abfluß des Absorptionsmittels (zum Beispiel wäßrige Salzsäure) dienen.

Die Zu- und Abflußrohre 91, 92, 93, 94 weisen Kompensatoren 20, 21 zur Aufnahme der Wärmedehnung auf.

Ferner kann die Vorrichtung mit einer Einrichtung 4 verbunden sein, die das Medium im Zwischenraum zwischen Außen- und Innenbehälter auf das Austreten des im Innenraum befindlichen korrosiven Mediums kontinuierlich analytisch überwacht. Die Einrichtung 4 weist vorzugsweise innerhalb der Vorrichtung angeordnete Sensoren für das korrosive Medium auf, die mit einer außerhalb der Vorrichtung angeordneten Meß- bzw. Anzeigeeinrichtung verbunden sind. Es kann auch vorgesehen werden, daß das Medium aus dem Zwischenraum zwischen Außen- und Innenbehälter aus der Vorrichtung herausgeführt wird, wo eine Einrichtung 4 angeordnet ist.

Das Innere des Innenbehälters kann zur Nutzung der Vorrichtung als sogenannte Waschkolonne mit Füllkörpern 12 beschickt werden. Die Füllkörpermaterialien werden entsprechend der jeweils zu behandelnden hochkorrosiven Medien ausgewählt. Schließlich wird das Innere des Innenbehälters 2 mit einem Absorptionsmedium durchströmt, beispielsweise mit wäßriger Salzsäure bzw. Natronlauge, die zur Absorption beispielsweise von HCl-Gas dient.

Diese Vorrichtung ermöglicht es, aus einem Gasstrom korrosive Gase auszuwaschen und/oder ein korrosives Waschmittel zu verwenden. Diese Vorrichtung ermöglicht es weiterhin, auch solche korrosionsbeständigen Werkstoffe für den Innenbehälter zu verwenden, die nicht für den Bau eines Druck tragenden Außenbehälters geeignet sind. Zugleich ist diese Vorrichtung für höhere bei der Absorption auftretende Drücke und/oder Temperaturen geeignet.

Das erfindungsgemäße Verfahren wird vorzugsweise mit der oben beschriebenen Vorrichtung durchgeführt. Es weist die folgenden Verfahrensschritte auf: ein fluides Medium in einem Zwischenraum zwischen dem Innenhälter und dem Außenbehälter wird auf einen Druck eingestellt, der um eine vorbestimmbare Differenz über dem Druck im Innenbehälter liegt, vorzugsweise auf eine Druckdifferenz von vorzugsweise 1 bis 2 bar; mindestens ein hochkorrosives gasförmiges Medium wird in den Innenbehälter 2 eingeführt und mit einem ebenfalls in den Innenbehälter 2 eingeführten fluiden Medium gewaschen.

Das fluide Medium ist vorzugsweise wäßrige Salzsäure bzw. Natronlauge. Das den Innenbehälter umgebende Medium ist insbesondere Wasser. Dieses Medium wird auf einen Druck eingestellt, der 1 bis 2 bar über dem Druck im Innenbehälter liegt. Die gewählte Differenz zwischen dem Druck im Innenbehälter und dem Raum zwischen Innen- und Außenbehälter wird auf das Material (Werkstoff) des Innenbehälters abgestimmt.

## Patentansprüche

1. Verfahren zur Absorption mindestens eines hochkorrosiven Mediums, dadurch gekennzeichnet, daß das hochkorrosive Medium und ein Absorptionsmedium in einen Innenbehälter (2) aus korrosiorsbeständigem Werkstoff einer Vorrichtung eingeführt werden, die außerdem einen Außenbehälter (1) aufweist, der von dem Innenbehälter (2) durch einen Zwischenraum beabstandet ist, wobei ein fluides Medium in diesem Zwischenraum auf einen Druck eingestellt wird, der um eine vorherbestimmte Differenz über dem Druck im Innenbehälter (2) liegt, und daß das hochkorrosive Medium im Innenbehälter (2) aus dem Absorptionsmedium gewaschen wird.

2. Verfahren nach Anspruch 1, dadurch gekennzeichnet, daß das Absorptionsmedium wäßrige Salzsäure oder Natronlauge ist.

3. Verfahren nach einem der Ansprüche 1 oder 2, dadurch gekennzeichnet, daß das hochkorrosive Medium HCl-Gas ist.

4. Verfahren nach einem der Ansprüche 1 bis 3, dadurch gekennzeichnet, daß das den Innenbehälter (2) umgebende Medium Wasser ist.

5. Verfahren nach einem der Ansprüche 1 bis 4, dadurch gekennzeichnet, daß der Innenbehälter (2) lösbar mit dem Außenbehälter (1) verbunden wird.

6. Verfahren nach einem der Ansprüche 1 bis 5, dadurch gekennzeichnet, daß der Innenbehälter (2) aus Kunststoff, seltenen metallischen Werkstoffen oder aus Email besteht.

7. Verfahren nach einem der Ansprüche 1 bis 6, dadurch gekennzeichnet, daß die Vorrichtung mit einer Einrichtung (4) verbunden wird, die das den Innenbehälter (2) umgebende Medium (3) auf ein Austreten des im Innenbehälter (2) befindlichen Mediums in den Raum zwischen Außenbehälter (1) und Innenbehälter (2) überwacht.

## Claims

1. A process for the absorption of at least one highly corrosive medium, which comprises introducing the highly corrosive medium and an absorption medium into an inner tank (2) made of corrosion-resistant material in an apparatus which also has an outer tank (1) which is separated from the inner tank (2) by an interspace, a fluid medium in this interspace being adjusted to a pressure which is above the pressure in the inner tank (2) by a predetermined difference, and washing the highly corrosive medium in the inner tank (2) out of the absorption medium.

2. A process as claimed in claim 1, wherein the absorption medium is aqueous hydrochloric acid or sodium hydroxide solution.

3. A process as claimed in either of claims 1 and 2, wherein the highly corrosive medium is HCl gas.

4. A process as claimed in any one of claims 1 to 3, wherein the medium surrounding the inner tank (2) is water.

5. A process as claimed in any one of claims 1 to 4, wherein the inner tank (2) is detachably connected to the outer tank (1).

6. A process as claimed in any one of claims 1 to 5, wherein the inner tank (2) is made of plastic, noble-metal materials or enamel.

7. A process as claimed in any one of claims 1 to 6, wherein the apparatus is connected to a device (4) which monitors the medium (3) surrounding the inner tank (2) for leakage of the medium in the inner tank (2) into the space between the outer tank (1) and the inner tank (2).

## Revendications

1. Procédé pour l'absorption d'au moins un milieu fortement corrosif, caractérisé par le fait que le milieu fortement corrosif et un milieu d'absorption sont introduits dans un récipient intérieur (2) d'un appareillage en matériau résistant à la corrosion, qui présente en outre un récipient extérieur (1), lequel est séparé du récipient intérieur (2) par un espace intermédiaire, tandis qu'un milieu fluide est introduit dans cet espace intermédiaire sous une certaine pression, qui se situe avec une différence prédéterminée au-dessus de la pression dans le récipient intérieur (2), et que le milieu fortement corrosif se situant dans le récipient intérieur (2) est débarrassé par lavage du milieu d'absorption.

2. Procédé selon la revendication 1, caractérisé par le fait que le milieu d'absorption est de l'acide chlorhydrique aqueux ou de la lessive de soude.

3. Procédé selon l'une des revendications 1 ou 2, caractérisé par le fait que le milieu fortement corrosif est du gaz HCl.

4. Procédé selon l'une des revendications 1 à 3, caractérisé par le fait que le milieu entourant le récipient intérieur (2) est de l'eau.

5. Procédé selon l'une des revendications 1 à 4, caractérisé par le fait que le récipient intérieur (2) est relié de façon amovible au récipient extérieur (1).

6. Procédé selon l'une des revendications 1 à 5, caractérisé par le fait que le récipient intérieur (2) est composé de matières plastiques, de matériaux métalliques rares ou d'émail.

7. Procédé selon l'une des revendications 1 à 6, caractérisé par le fait que l'appareil est relié à un dispositif (4) qui contrôle le milieu (3) entourant le récipient intérieur (2) pour détecter toute fuite du milieu se trouvant dans le récipient intérieur (2) dans l'espace compris entre le récipient extérieur (1) et le récipient intérieur (2).
